(19) Europäisches Patentamt
European Patent Office
Office européen des brevets

(11) Veröffentlichungsnummer: **0 266 677**
**B1**

(12) # EUROPÄISCHE PATENTSCHRIFT

(45) Veröffentlichungstag der Patentschrift: **28.11.90**

(51) Int. Cl.[5]: **B32B 27/36,** B32B 27/30, B32B 27/38, C08L 67/02, C08L 33/00, C09J 7/02

(21) Anmeldenummer: **87115895.2**

(22) Anmeldetag: **29.10.87**

(54) **Polyesterfolie mit Haftvermittlerbeschichtung.**

(30) Priorität: **07.11.86 DE 3637990**

(43) Veröffentlichungstag der Anmeldung:
**11.05.88 Patentblatt 88/19**

(45) Bekanntmachung des Hinweises auf die Patenterteilung:
**28.11.90 Patentblatt 90/48**

(84) Benannte Vertragsstaaten:
**DE FR GB IT LU NL**

(56) Entgegenhaltungen:
**EP-A- 0 146 066**
**US-A- 3 335 029**

(73) Patentinhaber: **HOECHST AKTIENGESELLSCHAFT, Postfach 80 03 20, D-6230 Frankfurt am Main 80(DE)**

(72) Erfinder: **Gribbin, John Derek, Dr., Birkenweg 16, D-6229 Schlangenbad 2(DE)**
Erfinder: **Dallmann, Hermann, Dr., Erbsenacker 29, D-6200 Wiesbaden(DE)**
Erfinder: **Engel, Dieter, Dr., Rüsselsheimer Strasse 33, D-6092 Kelsterbach(DE)**
Erfinder: **Hensel, Hartmut, Dr., Am Rotenberg 2, D-6229 Schlangenbad 3(DE)**

**EP 0 266 677 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine schmelzextrudierte, orientierte, selbsttragende Polyesterfolie, die ein- oder beidseitig mit einer Haftvermittlerbeschichtung überzogen ist.

Orientierte Polyesterfolie, insbesondere biaxial orientierte Folie aus Polyethylenterephthalat (PET), wird in großem Umfang als Trägermaterial für Zeichenfolie, fotografischen und reprografischen Film sowie für Verpackungs- und Etikettierungszwecke eingesetzt.

Da PET-Folie hydrophob ist und Beschichtungen nicht leicht annimmt, muß sie in den meisten Fällen, in denen sie als Basis- oder Trägerfolie für weitere Beschichtungen dienen soll, zunächst ein- oder beidseitig mit einer Haftvermittlerbeschichtung versehen werden, die an der Folie haftet und gleichzeitig auch für weitere aufgebrachte Beschichtungen aufnahmefähig ist. Aus den Druckschriften US-A-26 27 088 und US-A-26 98 240 ist beispielsweise eine Haftvermittlerbeschichtung für PET-Folie bekannt, die aus einem Terpolymeren aus Vinylidenchlorid, Acrylester und Itaconsäure besteht. Diese Haftvermittlerbeschichtung soll eine ausgezeichnete Haftung an der Polyesteroberfläche und auch an nachträglich aufgebrachten fotografischen Gelatineschichten auf der Basis von Wasser oder Alkohol aufweisen.

Eine weitere aus US-A-36 74 531 bekannte Haftvermittlerbeschichtung für PET-Folie enthält Copolymere eines Vinylhalogenesters, z.B. Vinylchloracetat, die mit zahlreichen anderen Monomeren copolymerisiert sein können, z.B. mit Acryl- und Methacrylsäure, -estern und -amiden, Olefinen und Vinylalkohol. Derartige Copolymere können auch durch Melamin- oder Harnstoff-Formaldehydharz in der Zusammensetzung vernetzt sein. Die haftvermittlerbeschichtete PET-Folie soll eine verbesserte Haftung gegenüber einer Vielzahl von Beschichtungen, u.a. auch von reprografischen Beschichtungen, aufweisen.

Einige dieser und andere Haftvermittlerbeschichtungen für Polyesterfolie können zwar das Haftvermögen von PET-Folie wirkungsvoll verbessern, für den Folienhersteller ist es jedoch auch wichtig, daß während der Produktion anfallender Folienabfall im Folienherstellungsverfahren regenierbar ist. Folienabfall wird normalerweise zerkleinert, geschmolzen, zu Pellets verarbeitet, mit Originalpolyesterrohstoff vermischt, erneut geschmolzen und wieder dem Folienextruder zugeführt. Während der Verarbeitung von PET-Folienregenerat können die Temperaturen zwischen 270 und 310°C betragen. Viele der obengenannten Haftvermittlerzusammensetzungen sind bei diesen Temperaturen nicht beständig und neigen dazu, die fertige orientierte PET-Folie, die beachtliche Mengen an solchem haftvermittlerbeschichteten Folienregenerat enthält, insbesondere nach wiederholten Durchgängen durch den Extruder, in unerwünschter Weise gelb oder schwarz zu verfärben. Das ist z.B. bei den als Haftvermittlerbeschichtungen für PET verwendeten, Vinylidenchlorid enthaltenden Polymeren gemäß US-A-26 27 088 und US-A-26 98 240 der Fall und ebenso bei den Haftvermittlerbeschichtungen auf der Basis von Vinylchloracetat enthaltenden Copolymeren gemäß US-A-36 74 538. Es wurde gefunden, daß die Verfärbung und der Abbau dieser Haftvermittlerbeschichtungen während des Wiedergewinnungsprozesses höchstwahrscheinlich auf die bei chlorhaltigen Haftvermittlerschichten stattfindende Abspaltung von Chlor und auf die dabei entstehenden Abbauprodukte zurückzuführen sind.

Als weitere Haftvermittler sind die thermofixierten Acryl- oder Methacrylbeschichtungen gemäß US-A-38 19 773 bekannt, die aus wäßrigem Medium auf PET-Folie aufgebracht werden können. Eine derartige Haftvermittlerbeschichtung verbessert die Haftung von darauf aufgebrachten reprografischen Schichten und Zeichenschichten auf der Basis von organischen Lösemitteln. In diesem Patent wird auch beschrieben, daß eine mit den dort genannten thermofixierten Acrylbeschichtungen haftvermittlerbeschichtete Folie regeneriert werden kann, indem man sie mit mindestens 50 Gew.-% an Originalpolyesterrohstoff mischt und den Folienextruder erneut mit dieser Mischung beschickt. In der Patentschrift wird die Herabsetzung der durch bestimmte Haftvermittlerbeschichtungen verursachten Probleme der Verfärbung und des Abbaus erwähnt. Verglichen mit den oben beschriebenen chlorhaltigen Haftvermittlerbeschichtungen trifft das zwar zu, doch die Acrylbeschichtungen nach diesem Patent, die mit den dort beschriebenen harzförmigen Vernetzungsmitteln vernetzt sind, verursachen immer noch eine unerwünschte Gelbfärbung einer fertigen Folie, die eine solche haftvermittlerbeschichtete Folie als Regenerat enthält, insbesondere im Vergleich zu einer Folie, die nur aus Originalpolyesterrohstoff besteht.

Ausgehend von dem aufgezeigten Stand der Technik liegt der vorliegenden Erfindung die Aufgabe zugrunde, eine Haftvermittlerbeschichtung für Polyesterfolien zu schaffen, die neben ihren im Vergleich zu den aus dem Stand der Technik bekannten Haftvermittlerbeschichtungen mindestens gleichwertigen Haftvermittlereigenschaften darüber hinaus nicht zu einer erheblichen Gelbfärbung der fertigen Folie führt, wenn eine mit der Haftvermittlerbeschichtung beschichtete Folie als Regenerat dem Folienherstellungsprozeß zugeführt wird, insbesondere im Vergleich zu einer Folie, die nur aus Originalpolyesterrohstoff besteht.

Gelöst wird diese Aufgabe durch eine Folie der eingangs genannten Gattung, deren kennzeichnende Merkmale darin zu sehen sind, daß die Haftvermittlerbeschichtung als wäßrige Polymerisatdispersion aufgetragen wird enthaltend ein durch radikalische Emulsionspolymerisation entstandenes Polymerisat auf Basis eines selbsthärtenden carboxyfunktionellen Polymeren, das zusätzlich Epoxygruppen enthält, und mindestens eines copolymerisierbaren α-β-olefinisch ungesättigten Monomeren.

Die als Haftvermittlerbeschichtung eingesetzte wäßrige Polymerisatdispersion weist im allgemeinen einen Feststoffgehalt im Bereich von 2 bis 75 Gew.-%, bevorzugt im Bereich von 4 bis 65 Gew.-%, auf, bezogen auf das Gesamtgewicht der Polymerisatdispersion. Der Feststoffgehalt ist bevorzugt so bemessen, daß sich eine Trockenschichtdicke im Bereich von etwa 0,002 bis 0,25 µm ergibt; in Trockengewicht ausgedrückt bedeutet dies einen Feststoffgehalt von 0,00305 g/m² bis 0,305 g/m², Bevorzugt hat die getrocknete Haftvermittlerbeschichtung aus vernetztem Acrylcopolymerem eine Dicke im Bereich von ca. 0,01 bis 0,05 µm, wobei 0,025 µm die angestrebte Dicke ist.

Für die radikalische Emulsionspolymerisation werden

A) 1 bis 99 Gew.-% eines carboxyfunktionellen Polymerisats in Form eines wäßrigen Systems mit

B) 1 bis 99 Gew.-% mindestens eines copolymerisierbaren, α-β-olefinisch ungesättigten Monomeren, jeweils bezogen auf den Gesamtfeststoffgehalt der Komponenten, und

C) 0,01 bis 10 Gew.-% mindestens eines Polymerisationsinitiators, bezogen auf den Monomeranteil der Komponente B), und

D) 0 bis 20 Gew.-% anionischer oder nichtionischer Emulgatoren oder eines Gemisches von beiden oder aber Schutzkolloiden, bezogen auf den Monomeranteil der Komponente B), in Gegenwart von weiteren üblichen Zusätzen bei einer Temperatur zwischen 0 und 150°C umgesetzt. Wäßrige Systeme können echte oder kolloidale Lösungen und/oder Dispersionen sein.

Durch die Auswahl geeigneter Ausgangssubstanzen ist ein Einstellen von Polymerisateigenschaften innerhalb weiter Grenzen möglich. Beispielsweise können durch Polymerisation selbst nicht vernetzend wirkender Vinylmonomerer in der wäßrigen Dispersion oder Lösung eines unvernetzten selbsthärtenden carboxyfunktionellen Polymeren wasserlösliche bzw. in Wasser dispergierfähige Polymerisate hergestellt werden. Dabei können beispielsweise die hydrophilen oder auch die hydrophoben Eigenschaften und die Härte bzw. die Flexibilität durch geeignete Wahl der Komponenten A) und B) gezielt eingestellt werden. Weiterhin können durch den Einbau reaktiver Vinylmonomerer zunächst in Wasser dispergierfähige Polymerisate hergestellt werden, die dann bevorzugt nach dem Aufbringen der Haftvermittlerbeschichtung auf die Folie über eine entsprechende Nachbehandlung in den vernetzten Zustand überführt werden.

Geeignete Polymere der Komponente A) werden in bekannter Weise gemäß DE-OS 28 11 913 durch Umsetzung von a) halogenfreien Polycarbonsäureeinheiten, b) salzbildenden Substanzen der Gruppe Alkali, Erdalkali und quartäre Ammoniumsalze, organische Basen und/oder Ammoniak, c1) OH-Gruppen enthaltenden Polymeren mit einer OH-Zahl von 20 bis 150 und/oder c2) Epoxidverbindungen und anschließender Lösung und/oder Dispergierung in Wasser hergestellt. In den Polymeren sind mindestens 3 der 4 angeführten Einheiten enthalten. Das Molekulargewicht derartiger Verbindungen liegt im Gewichtsmittel $M_w$ bei 2 000 bis 100 000, vorzugsweise 6 000 bis 50 000 (Gelchromatographie, Polystyrol-Standard).

Als Komponente B) kommen α-β-olefinisch ungesättigte Monomere, und zwar praktisch alle radikalisch polymerisierbaren Monomeren in Frage, wobei jedoch für Copolymerisationen die üblichen Einschränkungen gelten, die durch das Q- und e-Schema nach Alfrey und Price bzw. durch die Copolymerisationsparameter vorgegeben sind (vgl. z.B. Brandrup, Immergut, Polymer Handbook, 2nd ed. (1975), John Wiley & Son, New York).

Der Einsatz hydrophiler Monomerer ist für die Durchführung der erfindungsgemäßen Polymerisationen möglich, aber nicht generell notwendig.

Geeignete α-β-olefinisch ungesättigte Monomere sind beispielsweise (Meth)acrylatmonomere wie Methyl(meth)acrylat, Ethyl(meth)acrylat, Propyl(meth)acrylat, die verschiedenen Butyl(meth)acrylate, 2-Ethylhexyl(meth)acrylat, Glycidyl(meth)acrylat, (Meth)acrylamid, N-Methylol(meth)acrylamid, (Meth)acrylnitril und auch (Meth)acrylsäure selbst, vinylaromatische Monomere wie Styrol, α-Methylstyrol, Vinyltoluol, Vinylpyridin, Vinylestermonomere wie Vinylacetat, Vinylester verzweigter ($C_{19}$-$C_{12}$)-Carbonsäuren wie Versaticsäurevinylester; Linolsäurevinylester, α-β-ethylenisch ungesättigte Mono- und Dicarbonsäuren wie Crotonsäure, Maleinsäure, Itaconsäure, Sorbinsäure oder deren Ester bzw. Halbester, (Meth)acrylester teilweise und/oder vollständig fluorierter Alkohole entsprechend der allgemeinen Formel

$$\mathrm{CH_2{=}\overset{\overset{R^1}{|}}{C}H{-}\overset{\overset{O}{\|}}{C}{-}O(CH_2)_n{-}(CF_2)_m{-}R^2}$$

mit $R^1$=H, $CH_3$; $R^2$=H, F, n=0-10 und m=0-25,
Hexafluorpropylen, Perfluorhexylethylen, 2-Hydroperfluorethylallylether und 2-Hydroperfluorpropylallylether, Monomere vom Typ mehrfach, vorzugsweise zwei- bis dreifach ethylenisch ungesättigter Verbindungen wie Divinylbenzol, Ethandioldi(meth)acrylat, Propandioldi(meth)acrylat, Butandiol(meth)acrylat, Hexandioldi(meth)acrylat, Glycerintri(meth)acrylat, Pentaerythritoltri(meth)acrylat und Diallylphthalat.

Werden mehrfach ethylenisch ungesättigte Monomere eingesetzt, so beträgt ihre Menge im allgemeinen 0,01 bis 20 Gew.-%, bezogen auf die Gesamtmenge der Monomeren B). Durch den Zusatz dieser als Vernetzer wirkenden Monomeren sind Dispersionen mit teilweise oder vollständig vernetzten Partikeln

herstellbar.

Um Vernetzungsreaktionen in der Haftvermittlerbeschichtung durchführen zu können, ist es zweckmäßig, daß sowohl im Falle der Selbstvernetzung als auch im Falle der Fremdvernetzung Monomereinheiten mit funktionellen Gruppen in dem Copolymerisat vorhanden sind. Unter Monomeren mit funktionellen Gruppen sind solche zu verstehen, die neben ihrer olefinischen Doppelbindung, mit der sie bei der Herstellung in das entstehende Copolymerisat einpolymerisiert werden, zusätzlich noch chemische Gruppierungen tragen, die zu einem späteren Zeitpunkt, bevorzugt nach dem Aufbringen der fertigen Polymerisatdispersion unter Einwirkung von thermischer oder Strahlungsenergie und/oder Katalysatoren, mit chemischen Gruppierungen der gleichen oder einer andere Art umgesetzt werden können, in der Weise, daß eine Vernetzung erfolgt.

Beispiele für einsetzbare chemische Gruppierungen, die in der aufgebrachten Haftvermittlerbeschichtung zu Vernetzungen führen können, sind Carbonsäure-, Sulfosäure-, Hydroxy-, Amino-, Amido-, Keto-, Aldehyd-, Lactam-, Lacton-, Isocyanat- und Epoxygruppen. Copolymerisationsfähige Monomere, die derartige funktionelle Gruppierungen tragen, sind bekannt.

Eingesetzte Monomere, die Carbonsäuregruppierungen tragen, sind im allgemeinen Crotonsäure, Sorbinsäure, Itaconsäure, Fumarsäure, Maleinsäure, Maleinsäurehalbester bzw. die Halbester der Itacon- und der Fumarsäure, bevorzugt aber Acryl- und Methacrylsäure.

Monomere, die zur Vernetzung geeignete Epoxidgruppierungen aufweisen, sind z.B. Glycidylmethacrylat, Glycidylacrylat und Allylglycidylether.

Weitere copolymerisierbare Monomere sind Monomere mit Isocyanatgruppen wie Isocyanatoethyl(meth)acrylat sowie dessen Derivaten mit blockierter Isocyanatgruppe, ferner Aminoalkylverbindungen wie Methylaminoethyl(meth)acrylat und tert.-Butylaminoethyl(meth)acrylat, N-Alkoxyalkylamide wie Methoxy- oder Ethoxymethyl(meth)acrylamid, Hydroxyalkylester wie Hydroxyethyl- und Hydroxypropyl(meth)acrylat, ferner die entsprechenden Verbindungen der genannten (Meth)acrylsäurederivate von anderen ethylenisch ungesättigten Säuren wie Malein-, Itacon-, Croton- und Sorbinsäure.

Bevorzugte Dispersionscopolymerisate können als Monomereinheiten, bezogen auf die Menge der Komponente B) bis zu 100 Gew.-% Methylmethacrylat und/oder n-Butylacrylat, 0 bis 20 Gew.-% Hydroxyethylmethacrylat, 0 bis 20 Gew.-% Glycidylmethacrylat und 0 bis 20 Gew.-% Acrylsäure und/oder Methacrylsäure enthalten, wobei die Summe der Monomereinheiten stets 100% ist. Besonders bevorzugt ist ein Mischungsverhältnis, das 15 bis 80 Gew.-% Methylmethacrylat, 15 bis 50 Gew.-% n-Butylacrylat, 0 bis 15 Gew.-% Hydroxyethylmethacrylat, 0 bis 15 Gew.-% Glycidylmethacrylat und 0 bis 5 Gew.-% Acrylsäure und/oder Methacrylsäure als Monomereinheiten enthält.

Die Mengenverhältnisse der Komponenten A) und B) können in weiten Grenzen schwanken, je nachdem, ob weiche oder harte, gegebenenfalls flexible Polymerisateigenschaften gefordert werden. Vorzugsweise werden 5 bis 95 Gew.-% der Komponente A) mit 5 bis 95 Gew.-% der Monomeren B) umgesetzt, wobei die Mengenverhältnisse auf den Gesamtfeststoffgehalt der Komponenten bezogen sind. Die selbsthärtende Komponente A) gelangt dabei im allgemeinen in Form eines 5 bis 65 Gew.-%igen wäßrigen Systems zum Einsatz.

Die Emulsionspolymerisation wird in wäßrigem Medium bei Temperaturen im Bereich zwischen 0 und 150°C, vorzugsweise 20 und 100°C, insbesondere 40 und 90°C, durchgeführt. Hierbei wird das carboxyfunktionelle Polymere A) mit den Vinylmonomeren B) unter Zusatz eines Polymerisationsinitiators C) und gegebenenfalls weiterer üblicher Zusätze wie Emulgatoren und/oder Schutzkolloiden D) sowie Molekulargewichtsreglern polymerisiert. Das wäßrige Medium des Polymerisationsansatzes kann aus den wäßrigen Systemen der Komponente A) stammen, im allgemeinen wird jedoch dem Ansatz noch Wasser zugegeben, um die besten Bedingungen für die Emulsionspolymerisation zu erreichen.

Die Polymerisation kann in der Weise durchgeführt werden, indem das carboxyfunktionelle Polymere A) als wäßriges System, dem die gesamte Menge des bei der Polymerisation anwesenden Wassers zugegeben worden ist, zusammen mit einem Teil eines Initiators und gegebenenfalls einem Emulgator und einem Molekulargewichtsregler vorgelegt und auf die gewünschte Polymerisationstemperatur vorgeheizt wird, worauf das Monomerengemisch B) sowie der Rest des Initiators langsam zugegeben wird. Es ist jedoch auch möglich, jeweils einen Teil des Wassers, des carboxyfunktionellen Polymeren A) und gegebenenfalls des Emulgators vorzulegen und aus dem verbleibenden Wasser, den verbleibenden Anteilen der Komponente A), den Vinylmonomeren B) und gegebenenfalls einem Emulgator D) eine Voremulsion herzustellen, die dann in die auf Polymerisationstemperatur vorgeheizte und mit einem Polymerisationsinitiator C) versehene Vorlage langsam zugegeben wird. Die Zulaufzeit beträgt im allgemeinen 30 bis 180 min. Nach Beendigung des Zulaufs des Monomerengemischs wird der gesamte Ansatz noch für 1 bis 3h bei 60 bis 90°C, vorzugsweise bei 70 bis 85°C, nachgerührt, wobei gegebenenfalls weiterer Initiator zugesetzt wird, um einen vollständigen Umsatz der Vinylmonomeren zu erzielen. Der Wert für das mittlere Molekulargewicht $M_w$ des erhaltenen Polymerisats beträgt im allgemeinen 50 000 bis 10 Millionen, vorzugsweise 75 000 bis 1 Million, bezogen auf Polystyrol Standard-Gelchromatogramm.

Als Komponente C) wird im allgemeinen mindestens ein Polymerisationsinitiator bei der Emulsionspolymerisation verwendet. Radikalbildende Initiatoren sind beispielsweise Percarbonate, Perester wie tert.-Butylperpivalat, Peroctoat, Benzoylperoxyd, o-Methoxybenzoylperoxyd, Dichlorbenzylperoxyd, Azodiisobuttersäuredinitril, insbesondere aber Peroxyverbindungen oder aliphatische Azoverbindungen. Der Initiator kann wasserlöslich und/oder monomerlöslich sein. Bevorzugt sind z.B. Natrium-, Kalium-, Ammoniumperoxydisulfat bzw. Natrium-, Kalium, Ammoniumperoxydisulfat-Redoxsysteme mit Natrium-, Kalium-, Ammoniumsulfiden, -sulfiten oder anderen Reduktionsmitteln. Die Menge des Polymerisationsinitiators beträgt im allgemeinen 0,01 bis 10, vorzugsweise 0,02 bis 5, insbesondere 0,05 bis 3 Gew.-%, bezogen auf die Gesamtmenge der Vinylmonomeren B).

Die Polymerisation kann in Gegenwart oder Abwesenheit eines Emulgators und/oder eines Schutzkolloids D) durchgeführt werden. Dabei kommen gegebenenfalls anionische und/oder nicht-ionische Emulgatoren zum Einsatz. Beispiele für anionische Emulgatoren sind die Alkali- und Ammoniumsalze von Schwefelsäurehalbestern von Alkylphenolen oder den obengenannten Alkoholen oder auch Alkyl- oder Arylsulfonat, vorzugsweise die Alkalisalze des Schwefelsäurehalbesters eines mit 4 bis 5 Mol Ethylenoxyd umgesetzten Nonylphenols, Natriumlaurylsulfat, Natriumlaurylethoxylatsulfat und sekundäre Natriumalkansulfonate, deren Kohlenstoffkette 8 bis 12 C-Atome enthält.

Ferner kann zur Erhöhung der Stabilität der wäßrigen Copolymerisat-Dispersion zusätzlich ein nichtionischer Emulgator vom Typ eines ethoxylierten Alkylphenols oder Fettalkohols, z.B. Nonylphenol mit 4 bis 30 Mol Ethylenoxyd, in Mischung mit dem anionischen Emulgator eingesetzt werden.

Die Menge des anionischen Emulgators beträgt 0 bis 15 Gew.-%, bezogen auf die Vinylmonomeren B).

Weiterhin kann als Emulgator ein "Fluortensid" verwendet werden, wobei unter dem Begriff "Fluortensid" oberflächenaktive Verbindungen verstanden werden, die als hydrophobe Bestandteile Perfluoralkylreste mit 2 bis 20 C-Atomen oder Perfluoraralkylreste im Molekül enthalten, z.B. Perfluoralkylsulfonsäuren, Perfluoraralkylsulfonsäuren, langkettige Perfluoralkylcarbonsäuren, Perfluoralkanphosphonsäuren, -phosphinsäuren, mit jeweils 1 bis 15 C-Atomen im Alkanrest, die Salze dieser Säuren, Perfluoralkylsulfate und Perfluoraralkylsulfat.

Durch den Einsatz von Molekulargewichtsreglern wie Mercaptane, halogenhaltige Verbindungen und andere radikalübertragene Substanzen kann das Molekulargewicht der Polymerisate in bekannter Weise herabgesetzt werden. Bevorzugt werden hierzu Butylmercaptan, Octylmercaptan, Dodecylmercaptan, Tetrakismercaptoacetylpentaerythrit, Chloroform, Bromoform, Trichlorethylen, Trichlorbrommethan, Tetrachlorkohlenstoff und Toluol eingesetzt.

Die für die erfindungsgemäße Haftvermittlerbeschichtung eingesetzte Polymerisatdispersion ist selbstvernetzend. Daneben besteht aber auch noch die Möglichkeit der Fremdvernetzung. Hierzu wird eine Copolymerisatdispersion, die eine oder mehrere der genannten funktionellen Monomereinheiten trägt, bei der Emulsionspolymerisation mit einer weiteren niedermolekularen, oligomere n und/oder polymeren Verbindung vermischt, die ebenfalls funktionelle Gruppierungen trägt.

Die Vernetzung erfolgt auch bei der Fremdvernetzung, vorzugsweise beim Trocknen der in Form einer wäßrigen Polymerisatdispersion auf die Folie aufgebrachten Haftvermittlerbeschichtung, und zwar bevorzugt durch Reaktion zwischen der Polymerisatdispersion und der zugesetzten Fremdkomponente. Dabei kann selbstverständlich nicht immer ausgeschlossen werden, daß beide Komponenten auch noch mit sich selbst Reaktionen und/oder Vernetzungen eingehen können.

Vernetzende Fremdkomponenten sind beispielsweise Acrylat- Harze und verkappte Isocyanatharze, d.h. Isocyanat-Harze mit blockierter Isocyanatgruppe, die mit oder ohne Einwirkung von Katalysatoren wie Malein-, Zitronen-, Phosphor-, Alkylphosphorsäure, p-Toluolsulfonsäure und/oder Naphthalindisulfonsäure in Gegenwart von Copolymerisaten, die bevorzugt Hydroxyl-, Amid- oder Carboxylgruppen tragen, beim Trocknen hochvernetzte Beschichtungen ergeben können. Besonders bevorzugt werden Acrylharze und/oder methylveretherte Melaminharze als fremdvernetzende Komponenten eingesetzt.

Die Haftvermittlerbeschichtung kann in jedem geeigneten Stadium während oder nach der Folienherstellung auf die Polyesterfolie aufgebracht werden, d.h. vor oder während der Streckvorgänge (in-line) oder nach Fertigstellung der Folie (off-line). Sie wird nach dem Aufbringen durch Beaufschlagung mit Wärme getrocknet und vernetzt. Die entstehende haftvermittlerbeschichtete Polyesterfolie weist eine ausgezeichnete Haftung gegenüber vielen nachträglich aufgebrachten Beschichtungen auf der Basis organischer Lösemittel auf und eignet sich exzellent zur Verwendung als Regenerat bei der Wiederverarbeitung zu Polyesterfolie, ohne eine nennenswerte Verfärbung oder einen Abbau der Folie zu verursachen.

Für die Zwecke dieser Erfindung besteht die orientierte Polyesterträgerfolie vorzugsweise aus Polyethylenterephthalat, obwohl die Erfindung sich ebenso auf Folien auf der Basis eines durch Polykondensation eines Glykols, z.B. Ethylenglykol oder Butandiol und deren Mischungen, mit Terepthalsäure oder Mischungen von Terephthalsäure mit anderen Dicarbonsäuren wie z.B. Isophthalsäure, Diphensäure und Sebacinsäure oder deren polyesterbildende Aquivalente entstandenen kristallisierbaren Polyesters anwenden läßt, wobei diese Polyester nach bekannten Verfahren hergestellt werden. Die Folie kann nach gleichfalls bekannten Verfahren und mit bekannten Vorrichtungen hergestellt werden. Es wird z.B. eine Polyesterschmelze bereitet, die als amorphe Folie auf eine hochglanzpolierte rotierende Gießwalze extrudiert wird, wo sie sich zur gegossenen Folie verfestigt. Die Folie wird anschließend axial gestreckt, und zwar bei einer monoaxial orientierten Folie in einer Richtung, d.h. entweder in Extrusionsrichtung (längs) oder senkrecht zur Extrusionsrichtung (quer), und bei einer biaxial orientierten Folie in zwei Richtungen, d.h. sowohl in Längs- als auch in Querrichtung. Bei dem ersten an der gegossenen Folie durchgeführten Streckschritt kann beliebig in einer dieser beiden rechtwinklig zueinander verlaufenden Richtungen gestreckt werden. Daneben ist auch eine Simultanstreckung möglich. Der Verstreckungsgrad, durch den die Folie Festigkeit und Zähigkeit erhält, kann etwa das 3- bis 5fache der ursprünglichen Abmessung der gegossenen Folie in einer oder beiden Richtungen betragen. Vorzugsweise liegt der Verstreckungsgrad im Bereich zwischen etwa dem 3,2- und 4,2fachen der ursprünglichen Abmessung.

Die Streckvorgänge werden bei Temperaturen im Bereich etwa ab der Glasübergangstemperatur bis unterhalb der Temperatur, bei der das Polymere weich wird und schmilzt, durchgeführt.

Nach dem Strecken wird die Folie für die zur Kristallisation des Polyesters notwendige Dauer wärmebehandelt. Durch die Kristallisation erhält die Folie Festigkeit und gute Zugfestigkeitseigenschaften. Die Wärmebehandlung von Polyethylenterephthalat wird bei einer Temperatur im Bereich zwischen etwa 190°C und 240°C, vorzugsweise zwischen etwa 215°C und 235°C, durchgeführt.

Die erfindungsgemäße Beschichtung wird vorzugsweise in Form einer wäßrigen Dispersion oder Emulsion während der Folienherstellung "in line" aufgebracht: Auf der Stufe vor dem Verstrecken, also zum Zeitpunkt zwischen dem Vergießen der amorphen Folie und dem ersten Strecken, oder auf der Stufe zwischen den Streckvorgängen, also nach dem Strecken in einer Richtung und vor dem Strecken in der zweiten Richtung, wie es z.B. in US-A-38 19 773 beschrieben ist. Die der Folie beim Strecken oder den abschliessenden Konditionierstufen zugeführte Wärme reicht normalerweise aus, um das Wasser und andere flüchtige Bestandteile aus der Haftvermittlerbeschichtung zu vertreiben und diese zu trocknen und zu vernetzen.

In einer bevorzugten Ausführung wird die Haftvermittlerbeschichtung nach dem uniaxialen Strecken der Folie, d.h. nach dem Strecken der Folie in einer Richtung, jedoch vor dem Strecken in der im rechten Winkel dazu verlaufenden Richtung, aufgebracht. In einer weiteren bevorzugten Ausführung wird die Polyesterfolie vor dem Beschichten zunächst in Längsrichtung gestreckt. In dieser bevorzugten Ausführung wird die Folie nach dem Strecken in Längsrich nach einem der auf diesem Gebiet angewendeten bekannten Verfahren beschichtet. Das Beschichten kann z.B. durch Walzenbeschichtung, Sprühbeschichtung, Gravurbeschichtung, Schlitzgießerantrag oder Tauchbeschichtung erfolgen. Bevorzugt wird die Polyesterfolie mit Gravurwalzen beschichtet. Vor dem Beschichten wird die uniaxial gestreckte Folie vorzugsweise noch in bekannter Weise einer Coronabehandlung in einer Coronaentladevorrichtung unterzogen. Die Coronabehandlung vermindert die Hydrophobie der Polyesterfolienoberfläche, wodurch die wäßrige Beschichtung die Oberfläche besser benetzen und somit die Haftung der Beschichtung an der Oberfläche verbessern kann.

Die Beschichtung kann ein- oder beidseitig auf die Folie aufgebracht werden. Es ist aber auch möglich, nur eine Seite der Folie mit der erfindungsgemäßen Beschichtung zu versehen und auf die Gegenseite eine andere Beschichtung aufzubringen. Die Beschichtungsrezeptur kann bekannte Zusätze enthalten wie z.B. Antistatika, Netzmittel, Tenside, pH-Regulatoren, Antioxidantien, Farbstoffe, Pigmente, Gleitmittel und Anti-Blockmittel wie z.B. kolloidales $SiO_2$ usw. Normalerweise ist es angebracht, ein Tensid einzuarbeiten, um die Fähigkeit der wäßrigen Beschichtung zur Benetzung der Trägerfolie aus Polyester zu erhöhen.

Die erfindungsgemäßen Haftvermittlerbeschichtungen haben eine ausgezeichnete Wärmestabilität, und deshalb kann der bei der Folienherstellung anfallende Folienverschnitt der beschichteten Folie, mit frischem Polyester gemischt, wieder geschmolzen und zur Herstellung von orientierter Folie erneut in den Folienextruder eingespeist werden. Mit den hier verwendeten Begriffen "frischer Polyester" oder "Originalpolyesterrohstoff" wird ein Polyester bezeichnet, der selbst kein Regenerat fertiger Produkte wie z.B. einer Folie oder Faser ist, sondern zum erstenmal bei der Herstellung solcher Produkte eingesetzt wird. Eine so hergestellte Folie mit einem Gehalt von 5 bis zu etwa 70 Gew.-% an Regenerat aus beschichtetem Verschnitt, vorzugsweise mit einem Gehalt von jeweils 50 Gew.-% an Regenerat und frischem Polyester, erweist sich als sehr gut in Qualität, Farbe und Aussehen und zeigt höchstens einen sehr geringen, praktisch nicht wahrnehmbaren Abbau der Eigenschaften durch die von der Beschichtung herrührende Verunreinigung. Die beschichtete Folie nach dieser Erfindung bietet also dem Folienhersteller einen deutlichen wirtschaftlichen Vorteil gegenüber vielen anderen beschichteten Folien wie z.B. Folien, die mit Vinylidenchlorid enthaltenden Polymeren beschichtet sind, wie in US-A-2 627 088 und US-A-2 698 240 beschrieben, die zum Polymerenabbau und zur Verfärbung neigen, wenn sie wie oben angegeben wiedergewonnen werden. Ähnliche Vorteile ergeben sich auch gegenüber den thermofixierten Acrylbeschichtungen, die harzförmige Vernetzungsmittel enthalten, wie sie in US-A-3 819 773 beschrieben sind, oder gegenüber den Vinylacetatpolymeren mit harzförmigen Vernetzungsmitteln gemäß GB-A-1 497 657.

Die erfindungsgemäße wieder extrudierte Folie kann soviel an beschichteter Regeneratfolie enthalten, daß ihr Gehalt an vernetzter Haftvermittlerbeschichtung bis zu 1,0 Gew.-%, vorzugsweise 0,01 bis 0,5 Gew.-%, bezogen auf das Gewicht der Folie, beträgt.

Eine mit der erfindungsgemäßen Zusammensetzung beschichtete Polyesterfolie eignet sich ausgezeichnet als Trägerfolie für die Herstellung von lichtempfindlichen reprografischen Filmen. Bei der Herstellung solcher Filme wird auf eine Oberfläche der haftvermittlerbeschichteten Polyesterfolie eine lichtempfindliche Beschichtung aufgebracht, die aus einer Lösung eines eine lichtempfindliche Diazoniumverbindung enthaltenden oder damit imprägnierten harzförmigen Bindemittels in einem organischen Lösemittel besteht, und die lichtempfindliche Beschichtung wird anschließend getrocknet. Für diesen

Zweck geeignete harzförmige Bindemittel sind z.B. Celluloseacetobutyrat, Celluloseacetat, Celluloseacetopropionat sowie Vinylpolymere wie z.B. Polyvinylacetat. Als Lösemittel sind z.B. Aceton, Methylethylketon, Methylisobutylketon, Ethylenglykolmonomethylether und Mischungen dieser Substanzen geeignet. Die reprografischen Beschichtungen und die Verfahren zu ihrer Aufbringung und Verwendung sind bekannt.

In gleicher Weise stellt die erfindungsgemäß haftvermittlerbeschichtete Polyesterfolie ein ausgezeichnetes Substrat für das Aufbringen von Mattbeschichtungen dar, wodurch die Folie als Zeichenmaterial zu verwenden ist. Diese Mattbeschichtungen können auf einer organischen Zusammensetzung aus einem harzförmigen Bindemittel und einem darin feinverteilten, als "Körnungsmittel" dienenden partikelförmigen Material basieren. Als harzförmige Bindemittel können die bei den reprografischen Anwendungen bereits genannten harzförmigen Materialien sowie Acryl- oder Methacrylharze verwendet werden. Die organischen Lösemittel können ebenfalls die oben aufgeführten Lösemittel sein. Zu den partikelförmigen Materialien (Partikelgröße unter 10 µm) zählen Tone oder $SiO_2$. In solchen Mattbeschichtungen können auch andere Bestandteile wie z.B. Eindickungsmittel oder Dispergiermittel enthalten sein. Mattbeschichtungen dieser Art sind z.B. aus den Druckschriften GB-A-1 072 122 und US-A-3 624 021 bekannt.

Die erfindungsgemäße haftvermittlerbeschichtete Folie kann ferner als Verpackungs- oder Etikettierungsmaterial eingesetzt werden, zumal die Trübung bzw. die Transparenz nicht beeinflußt werden. Verglichen mit unbeschichteter Folie weisen die haftvermittlerbeschichteten Folien eine verbesserte Haftung gegenüber Druckfarben auf der Basis von organischen Lösemitteln auf. Diese Druckfarben können in organischen Lösemitteln hergestellte Dispersionen oder Lösungen von Pigmenten und/oder Farbstoffen in Verbindung mit Acrylharzen oder anderen Harzen und Eindickungsmitteln sein.

Das ausgezeichnete Haftvermögen der mit den erfindungsgemäßen vernetzten Acrylcopolymerschichten haftvermittlerbeschichteten Polyesterfolie an darauf aufgebrachten Beschichtungen auf der Basis von organischen Lösemitteln macht eine solche Folie für den Hersteller von fertigen reprografischen, grafischen und Verpackungsmaterialien universeller nutzbar.

Schließlich eignet sich die mit der erfindungsgemäßen Haftvermittlerschicht überzogene Folie auch noch besonders gut zum Einsatz als Trägerfolie für Magnetbänder wie Audio-, Video- oder Computerbänder. Eine solche Trägerfolie besitzt bevorzugt mehrschichtigen Aufbau, wobei wenigstens eine der Schichten fein dispers verteilte anorganische und/oder organische Teilchen in einer Größe und Menge, daß die Oberflächenstruktur dieser Seite der Folie sich nicht negativ auf die Oberflächenrauhigkeit der Gegenseite der Folie bzw. der Magnetschicht des Bandes auswirkt, enthält. Beispiele für derartige Teilchen sind $CaCO_3$, $BaSO_4$, $SiO_2$, natürliche oder synthetische Silikate, natürliches oder pyrogenes Aluminiumoxid, $TiO_2$, ZnO, MgO u.ä., Ruß sowie Teilchen aus polymeren Materialien wie z.B. Plastomeren, Elastomeren, Duromeren.

In den anschließend beschriebenen Ausführungsbeispielen wird die Erfindung näher erläutert.

Die reprografische Haftung wurde mit einem Lack der folgenden Zusammensetzung ermittelt: 9 Gew.-Teile Celluloseacetobutyrat (20-Sekunden-Type), gelöst in einer Mischung aus 88 Gew.-Teilen Ethylenglykolmonomethylether und 3 Gew.-Teilen Methylethylketon, wobei Rhodamin B als Farbstoff zugesetzt wurde (3 Gew.-Teile einer 1%igen Lösung von Rhodamin B in n-Butanol). Der Lack wurde mit Hilfe eines drahtumwickelten Stabes (Meyer-Rod Nr. 70) auf die beschichtete Oberfläche der Folie aufgetragen und 5 min bei 60°C im Ofen getrocknet. Mit einem Skalpell wurde eine Kreuzschraffierung in die Beschichtung eingeritzt, auf die schraffierte Fläche ein Klebeband (Scotch Tape 610) aufgedrückt, mit dem Fingernagel fest angedrückt und dann rasch von der Folie abgezogen. Der auf der schraffierten Fläche zurückbleibende Lack wurde als Prozentanteil des insgesamt aufgetragenen Lackes angegeben, d.h. kein Lack abgezogen = 100% Haftung, der gesamte Lack abgezogen = 0% Haftung, die Haftungswerte zwischen 0 und 100% bezeichnen jeweils den auf der Folie zurückgebliebenen Lackanteil. Der Versuch wurde zweimal an zwei Folienbögen (also insgesamt an vier Stellen) durchgeführt, und als Haftungswert wurde der Wert des Prüfbereichs mit dem schlechtesten Ergebnis angegeben.

Beispiel 1

Es wurde ein Latex mit 4% Feststoffgehalt bestehend aus einem Copolymerisat aus 30 Gew.-% eines carboxyfunktionellen Polymeren, das zusätzlich Epoxygruppen enthält, 35 Gew.-% Methylmethacrylat, 30 Gew.-% Butylacrylat, 5 Gew.-% Glycidylmethacrylat, jeweils bezogen auf das Gesamtgewicht der Feststoffe, hergestellt. Als carboxyfunktionelle Polymere mit zusätzlichen Epoxygruppen werden die Reaktionsprodukte eines Anhydridgemisches und einer OH-Gruppen enthaltenden Komponente verwendet.

Das Anhydridgemisch entsteht durch Umsetzung von Trimellitsäureanhydrid mit Propan-1,2-diol und besteht aus Trimellitsäureanhydrid und den Anhydriden der Formeln I und II.

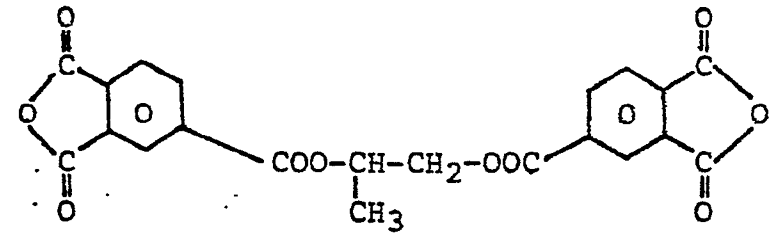

(I)

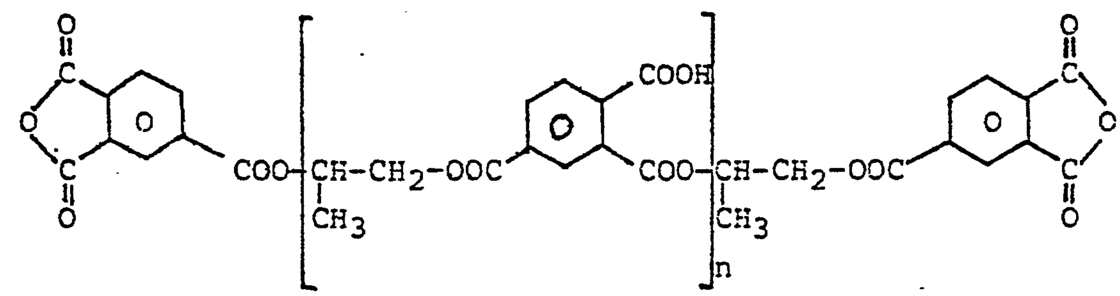

n = 1-8

(II)

Als OH-Gruppen enthaltende Komponenten kommen Polyester in Frage, hergestellt auf der Basis von Phthalsäureanhydrid, Isophthalsäure, Maleinsäureanhydrid, Propanol und Glycerin, wie in der DE-A-28 11 913 beschrieben. Dieser Latex wurde als Haftvermittler auf einer Polyesterfolie aufgebracht.

Zur Herstellung der Polyesterfolie wurde ein Polyethylenterephthalat-Granulat aufgeschmolzen und mittels einer Breitschlitzdüse zu einem Schmelzefilm geformt, der auf eine auf 20°C gehaltene Gießwalze aufgelegt wurde. Die erhaltene amorphe Folie wurde im Streckverhältnis von etwa 3,6:1 längsgestreckt, wobei sie auf einer Temperatur von 80°C gehalten wurde.

Die längsgestreckte Folie wurde coronabehandelt und danach mittels eines Reversgravursystems mit dem oben beschriebenen Latex beschichtet.

Die längsgestreckte coronabehandelte und beschichtete Folie wurde bei einer Temperatur von etwa 100°C getrocknet. Danach wurde die Folie im Streckverhältnis 3,6:1 quergestreckt, so daß eine biaxial gestreckte Folie erhalten wurde.

Die biaxial gestreckte 15 µm dicke Folie wurde bei 230°C thermofixiert.

Das Trockengewicht der Beschichtung betrug ca. 0,035 g/m², die Dicke der Trägerfolie ca. 12 µm.

Beispiel 2

Es wurde eine biaxial gestreckte 50 µm starke Polyesterfolie auf übliche Weise hergestellt.

Diese Folie wurde anschließend coronabehandelt und durch Reversgavurbeschichtung mit dem in Beispiel 1 beschriebenen Latex beschichtet; Antrag von ca. 0,50 g/m². Die Folie wurde danach bei 125°C getrocknet.

Die Trübung der Folie betrug 5% und wurde somit durch die Beschichtung nicht beeinträchtigt.

Beispiel 3 (Vergleichsversuch)

Beispiel 1 wurde wiederholt, jedoch enthielt das in dem Latex anwesende Copolymere in diesem Fall etwa äquimolare Anteile von Ethylacrylat und Methacrylat copolymerisiert mit 5 Gew.-% Methacrylamid und des weiteren 20%, bezogen auf das Trockengewicht eines Melaminformaldehydharzes als Vernetzungsmittel.

Beispiel 4 (Vergleichsversuch)

Beispiel 2 wurde wiederholt, jedoch mit dem Latex wie in Beispiel 3 beschrieben wurde.

Jede der nach den Beispielen 1 bis 4 hergestellten Folien wurde auf ihre Hafteigenschaften mit einem Lack wie vorstehend beschrieben geprüft.

Die Haftergebnisse waren wie folgt:

| Beispiel | % Haftung |
|---|---|
| 1 | 100 |
| 2 | 80 |
| 3 | 100 |
| 4 | 80 |
| Nullprobe (nicht beschichtet) | 0 |

Prüfung der Regenerierbarkeit

Die Regenerierbarkeit jeder Folie wurde beurteilt, indem jede Probe der beschichteten Folie zu Flocken zerkleinert, diese bei einer Temperatur von etwa 280°C durch einen Strangextruder geführt und das resultierende Strangextrudat anschließend zu Pellets zerschnitten wurde. Die entstandenen Pellets wurden dann jeweils bis ca. 280°C erneut extrudiert und zusätzlich zweimal pelletisiert.

Eine visuelle Prüfung der relativen Verfärbung der so hergestellten wärmebehandelten Pelletproben zeigte, daß die Pellets, die die beschichtete Folie aus Beispiel 3 enthielten, wesentlich gelber und dunkler waren als die Pellets, die beanspruchte, beschichtete Folie aus Beispiel 1 enthielten.

Messungen der gelben Farbe nach DIN 6167, in denen die Gelbzahldifferenz ΔGelbzahl gegen die Anzahl der Extrusionsdurchgänge von 1 bis 3 aufgetragen werden, zeigen ein Ansteigen der ΔGelbzahl im Vergleich zu einer nicht beschichteten Folie, die gleichfalls wieder extrudiert war, von +1 bis 2 für Beispiel 1 und +10 bis 11 für Beispiel 3 (siehe Diagramm).

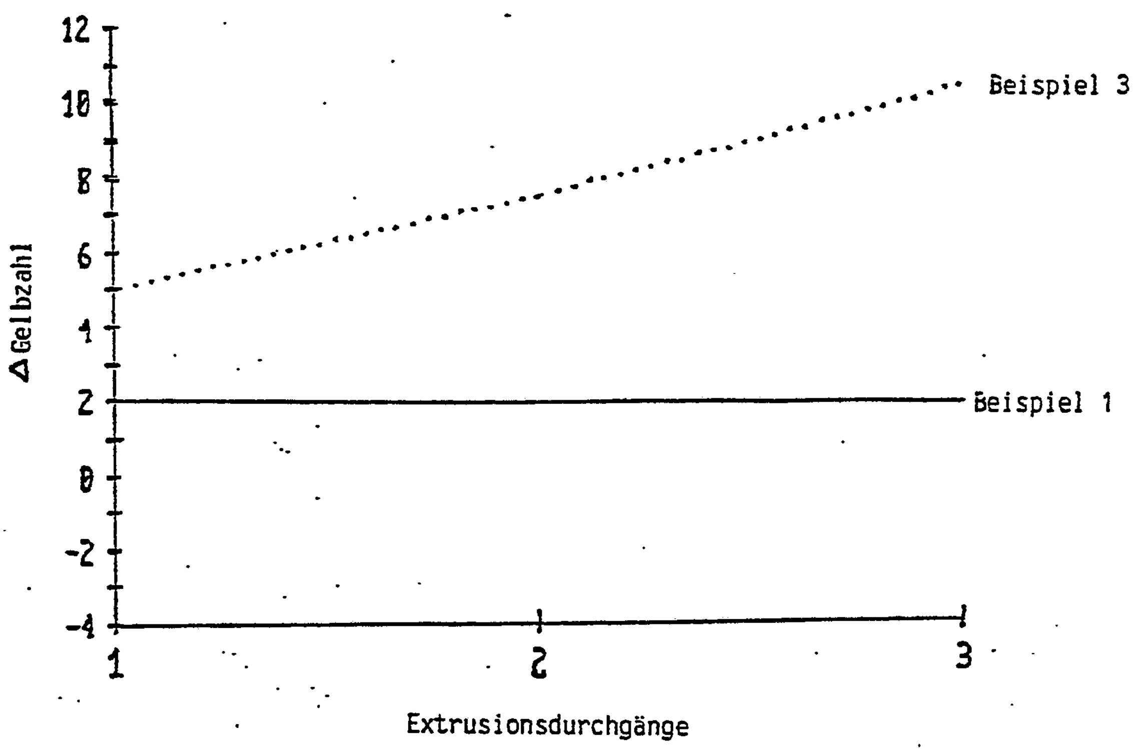


## Patentansprüche

1. Schmelzextrudierte, orientierte, selbsttragende Polyesterfolie, die ein- oder beidseitig mit einer Haftvermittlerbeschichtung überzogen ist, dadurch gekennzeichnet, daß die Haftvermittlerbeschichtung im wesentlichen ein durch radikalische Emulsionspolymerisation entstandenes Copolymerisat ist, bestehend aus einem selbsthärtenden carboxyfunktionellen Polymeren A), das zusätzlich Epoxygruppen enthält, und mindestens einem copolymerisierbaren α-β-olefinisch ungesättigten Monomeren B).

2. Folie nach Anspruch 1, dadurch gekennzeichnet, daß die Haftvermittlerbeschichtung eine Trockenschichtdicke im Bereich von 0,002 bis 0,25 μm aufweist, bevorzugt von 0,01 bis 0,05 μm.

3. Folie nach Anspruch 1 oder 2, dadurch gekennzeichnet, daß die Polyesterfolie einen Gehalt von 5 bis 70 Gew.-% an Regenerat aus beschichtetem Verschnittmaterial der Polyesterfolie aufweist.

4. Folie nach einem der Ansprüche 1 bis 3, dadurch gekennzeichnet, daß der Gehalt an durch den Einsatz von Regenerat in die Polyesterfolie inkorporierter Haftvermittlerbeschichtung bis zu 1 Gew.-% beträgt, vorzugsweise im Bereich von 0,01 bis 0,5 Gew.-% liegt, bezogen auf die Polyesterfolie.

5. Haftvermittlerbeschichtung für eine Folie nach einem der Ansprüche 1 bis 4, dadurch gekennzeichnet, daß sie ein in der radikalischen Emulsionspolymerisation der Komponenten

A) 1 bis 99 Gew.-% eines carboxyfunktionellen Polymerisats in Form eines wäßrigen Systems mit

B) 1 bis 99 Gew.-% mindestens eines copolymerisierbaren, α-β-olefinisch ungesättigten Monomeren, jeweils bezogen auf den Gesamtfeststoffgehalt der Komponenten, und

C) 0,01 bis 10 Gew.-% mindestens eines Polymerisationsinitiators, bezogen auf den Monomeranteil der Komponente B), und

D) 0 bis 20 Gew.-% anionischer oder nichtionischer Emulgatoren oder eines Gemisches von beiden oder aber Schutzkolloiden, bezogen auf den Monomeranteil der Komponente B), und

in Gegenwart von weiteren üblichen Zusätzen bei einer Temperatur zwischen 0 und 150°C entstehendes Copolymerisat enthält.

6. Haftvermittlerbeschichtung nach Anspruch 5, dadurch gekennzeichnet, daß die Komponenten A) und B) jeweils in Mengen von 5 bis 95 Gew.-%, jeweils bezogen auf den Gesamtfeststoffgehalt der Komponenten, eingesetzt werden.

7. Haftvermittlerbeschichtung nach Anspruch 5 oder 6, dadurch gekennzeichnet, daß als Komponente B) 15 bis 80 Gew.-% Methylmethacrylat, 15 bis 50 Gew.-% n-Butylacrylat, 0 bis 15 Gew.-% Hydroxyethylmethacrylat, 0 bis 15 Gew.-% Glycidylmethacrylat und 0 bis 15 Gew.-% Acryl- und/oder Methacrylsäure, bezogen auf die Menge der Komponente B), eingesetzt werden.

8. Verfahren zur Herstellung einer Folie nach einem der Ansprüche 1 bis 4 mit einer Haftvermittlerbeschichtung nach einem der Ansprüche 5 bis 7, bei dem die Haftvermittlerbeschichtung als wäßrige Polymerisatdispersion auf eine Polyethylenterephthalatfolie nach dem Strecken der Folie in einer Richtung, jedoch vor dem Strecken in der im rechten Winkel dazu verlaufenden anderen Richtung aufgebracht wird und bei dem die beim Strecken zugeführte Wärme im wesentlichen ausreicht, das Wasser und andere flüchtige Bestandteile aus der Haftvermittlerbeschichtung zu vertreiben und diese zu trocknen und zu vernetzen.

9. Verfahren nach Anspruch 8, dadurch gekennzeichnet, daß das Beschichten durch Walzenbeschichtung, Sprühbeschichtung, Gravurbeschichtung, Schlitzgießerantrag oder Tauchbeschichtung erfolgt, bevorzugt durch Gravurbeschichtung.

10. Verfahren nach Anspruch 8 oder 9, dadurch gekennzeichnet, daß die uniaxial gestreckte Folie vor dem Beschichten mit Haftvermittler einer Coronabehandlung unterzogen wird.

## Claims

1. Melt-extruded, oriented, self-supporting polyester film, which on one or the two surfaces carries an adhesion-promoting coating, characterized in that said adhesion-promoting coating essentially is a copolymer, which has been obtained by a free-radical emulsion polymerization and is comprised of a self-curing carboxy-functional polymer A) which additionally contains epoxy groups; and of at least one copolymerizable monomer B) of α-β-olefinic unsaturation.

2. Film as claimed in claim 1, characterized in that said adhesion-promoting coating has a dry coating thickness in the range of 0.002 to 0.25 µm, preferably of 0.01 to 0.05, µm.

3. Film as claimed in claim 1 or 2, characterized in that said polyester film contains 5 to 70% by weight of reclaim material consisting of coated waste material of said polyester film.

4. Film as claimed in any of claims 1 to 3, characterized in that the amount of adhesion-promoting coating, which is incorporated in said polyester film due to the use of reclaim material, is up to 1% by weight, preferably in the range of 0.01 to 0.5% by weight, relative to the weight of the polyester film.

5. Adhesion-promoting coating for a film as claimed in any of claims 1 to 4, characterized in that a copolymer obtained by the free-radical emulsion polymerization of the following components

A) 1 to 99% by weight of a carboxy-functional polymer in the form of an aqueous system with

B) 1 to 99% by weight of at least one copolymerizable monomer of α-β-olefinic unsaturation, the percentages each time relating to the total solids content of these components, and

C) 0.01 to 10% by weight, relative to the monomer content of component B), of at least one polymerization initiator, and

D) 0 to 20% by weight, relative to the monomer content of component B), of anionic or nonionic emulsifiers or of a mixture of the two or of protective colloids, is contained in said film, said polymerization being performed at a temperature between 0°C and 150°C, in the presence of further conventional admixtures.

6. Adhesion-promoting coating as claimed in claim 5, characterized in that components A) and B) are each added in amounts of 5 to 95% by weight, each time related to the total solids content of these components.

7. Adhesion-promoting coating as claimed in claim 5 or 6, characterized in that component B) is comprised of 15 to 80% by weight of methyl methacrylate, 15 to 50% by weight of n-butyl acrylate, 0 to 15% by weight of hydroxyethyl methacrylate, 0 to 15% by weight of glycidyl methacrylate and 0 to 15% by weight of acrylic and/or methacrylic acid, each time related to the amount of component B).

8. Process for the production of a film as claimed in any of claims 1 to 4 and having an adhesion-promoting coating as claimed in any of claims 5 to 7, in which said adhesion-promoting coating is applied, as an aqueous polymer dispersion, to a polyethylene terephthalate film after stretching said film in one direction, but prior to stretching it in the second direction running perpendicularly to said first direction, and in which the heat supplied during stretching is essentially sufficient to remove the water and other volatile constituents from said adhesion-promoting coating and to dry and crosslink the latter.

9. Process as claimed in claim 8, characterized in that coating is effected by means of roller coating, spray coating, gravure coating, die coating or dip coating, preferably by means of gravure coating.

10. Process as claimed in claim 8 or 9, characterized in that the monoaxially stretched film is subjected to a corona treatment prior to being coated with the adhesion promoter.

**Revendications**

1. Pellicule autoportante en polyester orientée et extrudée à l'état fondu, qui est recouverte sur une ou deux faces d'une couche d'agent d'adhérence, caractérisée en ce que la couche d'agent d'adhérence est un copolymère formé par polymérisation radicalaire en émulsion, constitué d'un polymère A) autodurcissant à fonctions carboxyliques, qui renferme en plus des groupes époxy, et d'au moins un monomère B) copolymérisable à insaturation $\alpha,\beta$-oléfinique.

2. Pellicule selon la revendication 1, caractérisée en ce que la couche d'agent d'adhérence présente une épaisseur à sec comprise entre 0,002 et 0,25 µm, de préférence entre 0,01 et 0,05 µm.

3. Pellicule selon la revendication 1 ou 2, caractérisée en ce que la pellicule en polyester a une teneur de 5 à 70% en poids de matériau régénéré à partir des déchets enduits de la pellicule en polyester.

4. Pellicule selon l'une des revendications 1 à 3, caractérisée en ce que la proportion de la chouche d'agent d'adhérence incorporé dans la pellicule en polyester, par utilisation de matériau régénéré, atteint jusqu'à 1% en poids et est de préférence comprise entre 0,01 à 0,5% en poids, par rapport à la pellicule en polyester.

5. Couche d'agent d'adhérence pour une pellicule selon l'une des revendications 1 à 4, caractérisée en ce qu'elle contient un copolymère formé par polymérisation radicalaire en émulsion des composants:

A) 1 à 99% en poids d'un polymère à fonctions carboxyliques sous forme d'un système aqueux avec

B) 1 à 99% en poids d'un monomère copolymérisable à insaturation $\alpha,\beta$-éthylénique, chaque fois par rapport au pourcentage total en solides des composants, et

C) 0,001 à 10% en poids d'au moins un amorceur de polymérisation, par rapport à la partie monomère du composant B), et

D) 0 à 20% en poids d'émulsifiants anioniques ou non-ioniques ou d'un mélange des deux ou encore de colloïdes protecteurs, par rapport à la partie monomère du composant B), et en présence d'autres additifs usuels, à une température comprise entre 0 et 150°C.

6. Couche d'agent d'adhérence selon la revendication 5, caractérisée en ce que les composants A) et B) sont mis en oeuvre à raison chaque fois de 5 à 95% en poids, chaque fois par rapport à la quantité totale de solides des composants.

7. Couche d'agent d'adhérence selon la revendication 5 ou 6, caractérisée en ce que l'on utilise comme composant B) 15 à 80% en poids de méthacrylate de méthyle, 15 à 50% en poids d'acrylate de n-butyle, 0 à 15% en poids de méthacrylate d'hydroxyéthyle, 0 à 15% en poids de méthacrylate de glycidyle et 0 à 15% en poids d'acide acrylique et/ou d'acide méthacrylique, par rapport à la quantité du composant B).

8. Procédé de fabrication d'une pellicule selon l'une des revendications 1 à 4, pourvue d'une couche d'agent d'adhérence selon l'une des revendications 5 à 7, dans lequel la couche d'agent d'adhérence est déposée sous forme d'une dispersion aqueuse de polymère sur une pellicule de poly(téréphtalate d'éthylène) aprés l'étirage de la pellicule dans und direction, mais avant l'étirage dans l'autre direction qui lui est perpendiculaire, et dans lequel la chaleur fournie pour l'étirage suffit dans l'ensemble à chasser de la chouche d'agent d'adhérence l'eau et les autres constituants volatils et à sécher et réticuler cette couche.

9. Procédé selon la revendication 8, caractérisée en ce que le revêtement peut être réalisé par enduction au rouleau, par enduction par pulvérisation, par enduction par gravure, par dépôt par extrudeuse à fente large ou par enduction par immersion, de préférence par enduction par gravure.

10. Procédé de fabrication d'une pellicule selon la revendication 8 ou 9, caractérisée en ce que la pellicule étirée selon un axe est soumise à un traitement corona avant enduction avec l'agent d'adhérence.